# EUROPÄISCHE PATENTANMELDUNG

(11) **EP 1 072 494 A1**
(43) Veröffentlichungstag der Anmeldung: **31.01.2001**
(21) Anmeldenummer: 00101587.4
(22) Anmeldetag: 27.01.2000
(51) Int. Cl.: B62B 3/16, B65D 19/00

(54) **Rollpalette**

(30) Priorität: 30.07.1999 DE 29913060 U
(71) Anmelder: Beiner, Günter, 32657 Lemgo (DE); Biehl, Waldemar, 59581 Warstein (DE)
(72) Erfinder: Beiner, Günter, 32657 Lemgo (DE); Biehl, Waldemar, 59581 Warstein (DE)
(74) Vertreter: Körner, Ekkehard, Dipl.-Ing.

(57) **Zusammenfassung**

Eine Rollpalette für Lebensmittel- und Getränkemärkte aus einer rechteckigen Tragplatte aus Kunststoff, die an ihrem Rand eine mit ihr integral ausgebildete, sich nach unten erstreckende, umlaufende Wand aufweist und innerhalb des von dieser umschlossenen Raums durch eine mit der Tragplatte integral ausgebildete Rippenstruktur ausgesteift ist, und aus Laufrollen an der Unterseite der Tragplatte weist eine an der Unterseite angebrachte Abdeckplatte auf, die den von der umlaufenden Wand umschlossenen Raum dicht abschließt, um Schmutzansammlungen in den von der Rippenstruktur ausgebildeten Kammern zu vermeiden.

## Beschreibung

Die Erfindung bezieht sich auf eine Rollpalette für Lebensmittel- und Getränkemärkte und dgl., bestehend aus einer rechteckigen Tragplatte aus Kunststoff, die eine im wesentlichen ebene Oberseite aufweist, häufig mit Einrichtungen zum Befestigen einer im wesentlichen aufrecht stehenden Wand- oder Gitterkonstruktion an wenigstens zwei gegenüberliegenden Seiten, und aus Laufrollen, die an der Unterseite der Tragplatte angebracht sind.

Rollpaletten der vorgenannten Art sind Bestandteil sogenannter Dollies, die als von Hand schiebbare Rollbehälter in Supermärkten für den Transport von Waren zwischen dem Lager und den Verkaufsregalen dienen. Ein solcher Dolly ist mit Gittern, häufig nur an zwei Seiten, versehen, die den Inhalt gegen Herabfallen schützen. Hat ein Dolly nur zwei solcher Gitter, werden diese in aller Regel durch Bänder oder dgl. miteinander verschnürt, um ein Voneinanderspreizen der Gitter zu verhindern und dadurch die Stabilität der Anordnung zu erhöhen. Dollies dieser Art haben Normabmessungen von 600 x 800 mm Grundfläche und dienen auch als fahrbare Paletten in Transportfahrzeugen.

Aus Kunststoff gespritzte Rollpaletten der genannten Art haben auf ihrer Unterseite eine von einem umlaufenden Rand umschlossene Aussteifungsstruktur, die eine Vielzahl nach unten offener Kammern bilden. Diese werfen ein Hygieneproblem auf, da sich in ihnen leicht Schmutz ansammeln kann, sie nur schwierig zu reinigen sind und daher Ungeziefer zum Nisten einladen.

Die Erfindung will diesbezüglich Abhilfe schaffen. Dieses gelingt ihr mit den in Anspruch 1 angegebenen Merkmalen. Vorteilhafte Ausgestaltungen der Erfindung sind Gegenstand der Unteransprüche.

Das Hygieneproblem wird dadurch gelöst, daß die Unterseite der Tragplatte durch eine Abdeckplatte verschlossen ist, die abgedichtet an der Unterseite der Tragplatte befestigt ist. Diese Abdeckplatte verschließt nicht nur die Kammern an der Unterseite der Tragplatte und macht sie somit für Schmutz und Ungeziefer unzugänglich, sondern bietet auch eine im wesentlichen glatte Oberfläche an, die mit einfachen Mitteln gereinigt werden kann. Die Abdeckplatte ist mit der Tragplatte vorzugsweise verrastet und zweckmäßigerweise mittels der die Konsolen der Laufrollen befestigenden Schrauben an der Tragplatte gesichert.

Die Erfindung wird nachfolgend unter Bezugnahme auf in den Zeichnungen dargestellte Ausführungsbeispiele erläutert. Es zeigt:
Fig. 1 eine Ausführungsform der Erfindung in teilweise geschnittener Seitenansicht;
Fig. 2 in der oberen Hälfte eine Draufsicht auf die Tragplatte von Fig. 1, und in der unteren Hälfte eine Ansicht von unten;
Fig. 3 in Längsschnittdarstellung ein Detail im Bereich einer Laufrollenlagerung;
Fig. 4 in Längsschnittdarstellung ein Detail im Bereich von Steckbuchsen und Griffmulde, und
Fig. 5 eine Darstellung mehrerer Rollpaletten nach Fig. 1 im Schnitt im gestapelten Zustand.

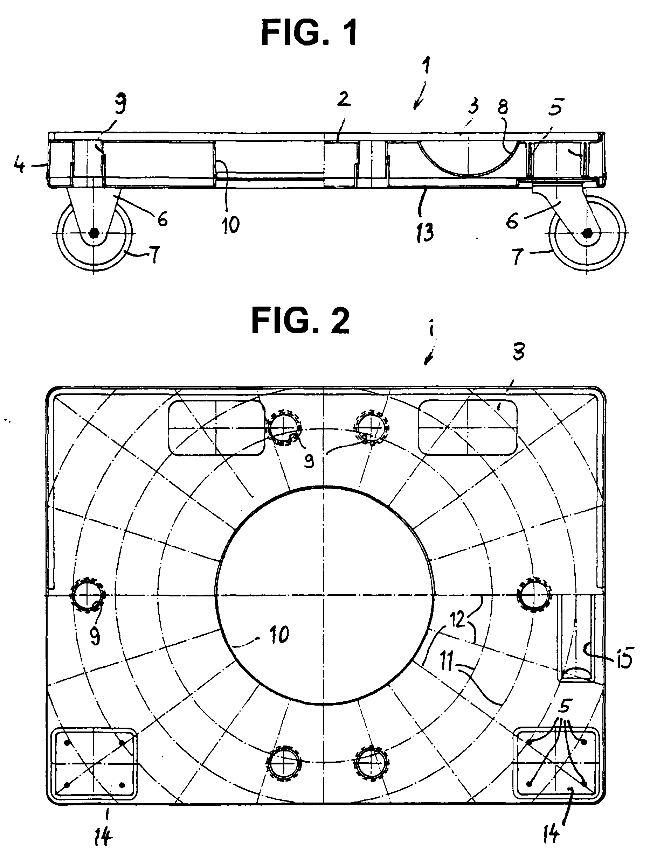

Fig. 1 zeigt teilweise geschnitten von der Seite eine Rollpalette, die insgesamt mit 1 bezeichnet ist. Sie besteht aus einer Tragplatte 2 aus gespritztem Kunststoff, die einen umlaufenden, hochgezogenen Rand 3 von etwa 1 cm Höhe aufweist. An den hochgezogenen Rand 3 schließt sich nach unten eine umlaufende Wand 4 an. An der Unterseite der Tragplatte 2 sind vier Buchsenquartette 5 für die Montage der Konsolen 6 von vier Laufrollen 7 angebracht, von denen zwei einander benachbarte Laufrollen 7 lenkbar sind.

In die Oberseite der Tragplatte 2 sind vier Vertiefungen 8 eingeformt, von denen in Fig. 1 nur eine erkennbar ist. Außerdem weist die Tragplatte 2 mehrere Buchsen 9 auf, die zur klemmenden Aufnahme der Stäbe einer Wand- oder Gitterkonstruktion (nicht dargestellt) vorgesehen sind. Mit Ausnahme der Konsolen 6 und der Laufrollen 7 ist diese Konstruktion einstückig ausgebildet.

Die Drauf- und Unteransicht von Fig. 2 zeigt, daß die Tragplatte 2 in der Mitte einen großen Durchbruch 10 aufweist, der der Gewichtsverminderung dient. Man erkennt ferner, daß die Tragplatte 2 durch mehrere ringförmige und radial verlaufende Rippen 11 bzw. 12 ausgesteift ist.

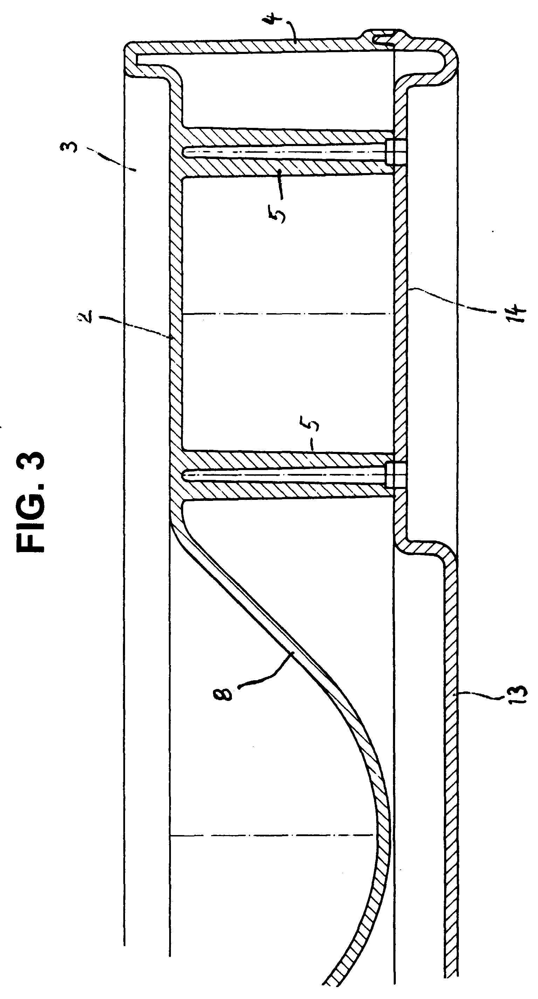

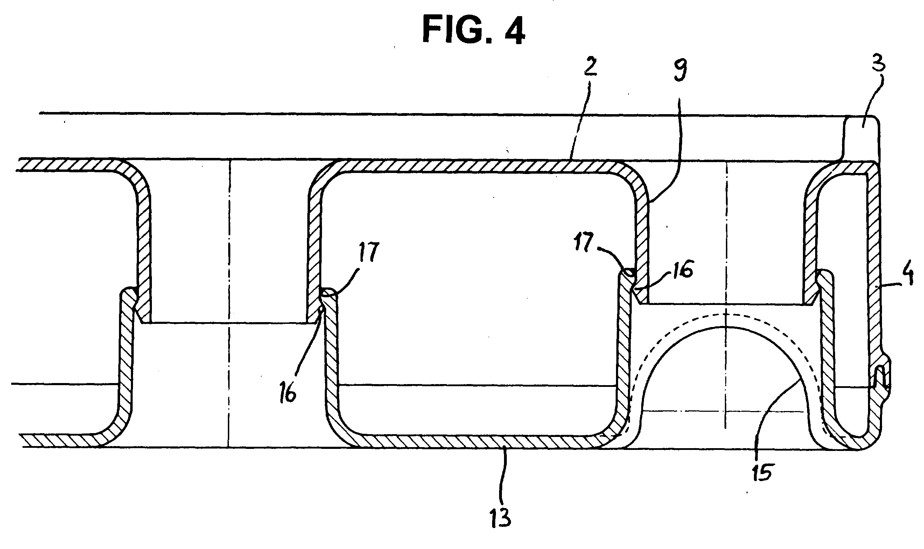

An der Unterseite der Tragplatte 2 ist eine in wesentlichen flache Abdeckplatte 13 angebracht, die an der Unterseite der Tragplatte 2 durch Verrastung und Verschraubung so dicht befestigt ist, daß in den von den beiden Platten 2 und 13 umschlossenen Hohlraum kein Schmutz oder Ungeziefer eindringen kann. Die Abdeckplatte 13 ist daher auch mit dem Rand der Öffnung 10 sowie mit den Buchsen 9 dicht verbunden, siehe hierzu die Einzelheiten der Fig. 3 und 4.

Die Abdeckplatte 13 kann im Bereich der Buchsen 9 geschlossen, oder aber, wie in den Zeichnungen gezeigt, mit Öffnungen versehen sein, um keine Probleme beim Einstecken der Zapfen von Wand- oder Gitterelementen (nicht dargestellt) zu schaffen. Sie ist dann aber jedenfalls mit den Buchsen 9 abgedichtet verbunden, wie gezeigt.

Im Bereich der Zapfen 5 weist die Abdeckplatte 13 jeweils Plattformen 14 auf, die an den Enden der Zapfen 5 anliegen und der Montage der Konsolen 6 für die Laufrollen 7 dienen. Durch Anschrauben der Konsolen 6 der Laufrollen 7 an der Tragplatte 2 unter Zwischenlage der Abdeckplatte 13 wird letztere an der Tragplatte 2 gesichert.

Weil die glatte Unterseite das Ergreifen der Rollpalette etwas erschwert, ist in die Unterseite der Abdeckplatte 13 wenigstens eine Griffmulde 15 randnah eingeformt, siehe hierzu Fig. 2 und 4.

Die Fig. 4 zeigt ferner, daß die Abdeckplatte 13 an den Buchsen 9 durch Verrastung gesichert ist, wozu die Buchsen 9 einen nach außen vorstehenden umlaufenden Bund 16 und die Abdeckplatte 13 an den Rändern der die Buchsen 9 aufnehmenden Durchbrüche eine nach innen vorstehende Wulst 17 aufweisen.

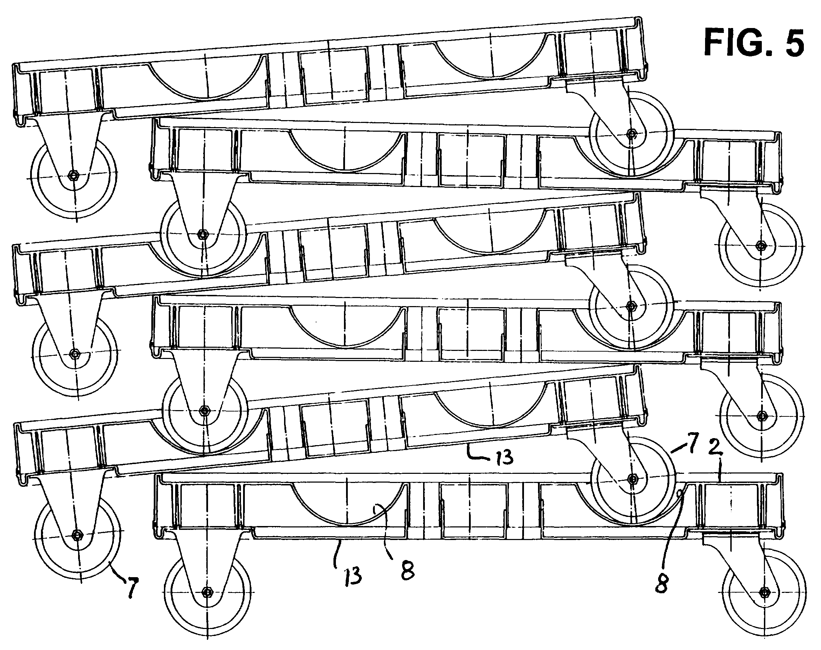

Fig. 5 zeigt, wie die Rollpaletten platzsparend gestapelt werden können. Zwei der Laufrollen 7 liegen jeweils in zwei der Vertiefungen 8, und durch umschichtiges Anordnen der Rollpaletten 1, wie in Fig. 5 gezeigt, läßt sich die Stapelhöhe vermindern, obgleich nur zwei der Laufrollen 7 in Vertiefungen 8 aufgenommen sind.

## Patentansprüche

1. Rollpalette für Lebensmittel- und Getränkemärkte und dgl., bestehend aus einer im wesentlichen rechteckigen Tragplatte aus Kunststoff, die an ihrem Rand eine mit ihr integral ausgebildete, sich nach unten erstreckende, umlaufende Wand aufweist und innerhalb des von dieser umschlossenen Raums durch eine mit der Tragplatte integral ausgebildeten Rippenstruktur ausgesteift ist, und aus Laufrollen, die an der Unterseite der Tragplatte angebracht sind, **dadurch gekennzeichnet**, daß der von der umlaufenden Wand (4) umschlossene Raum an der Unterseite der Tragplatte (2) von einer Abdeckplatte (13) dicht verschlossen ist.

2. Rollpalette nach Anspruch 1, dadurch gekennzeichnet, daß die Laufrollen (7) jeweils einen Lagerbock (6) aufweisen, der durch die Abdeckplatte (13) hindurch an der Tragplatte (2) befestigt, insbesondere angeschraubt, ist.

3. Rollpalette nach Anspruch 1 oder 2, dadurch gekennzeichnet, daß in der Abdeckplatte (13) nahe deren Rand wenigstens eine Griffmulde (15) ausgebildet ist.

4. Rollpalette nach Anspruch 3, dadurch gekennzeichnet, daß die Griffmulde (15) an einer Schmalseite der Abdeckplatte (13) ausgebildet ist.

5. Rollpalette nach einem der vorhergehenden Ansprüche, dadurch gekennzeichnet, daß in der Tragplatte (2) Steckbuchsen (9) zum Befestigen einer Wand- oder Gitterkonstruktion ausgebildet sind.

6. Rollpalette nach Anspruch 5, dadurch gekennzeichnet, daß die Abdeckplatte (13) auch an den Wänden der Steckbuchsen (9) befestigt, insbesondere verrastet, ist.

7. Rollpalette nach Anspruch 6, dadurch gekennzeichnet, daß die Abdeckplatte (13) unterhalb der Steckbuchsen (9) nach unten offen ist.

8. Rollpalette nach einem der vorhergehenden Ansprüche, dadurch gekennzeichnet, daß die Tragplatte (2) und die Abdeckplatte (13) in ihrem Mittenbereich jeweils eine vorzugsweise runde Öffnung (10) übereinstimmender Abmessungen haben und am Rand dieser Öffnungen (10) dicht miteinander verbunden sind.
